# EUROPEAN PATENT APPLICATION

(11) **EP 4 778 654 A1**
(43) Date of publication of application: **22.07.2026**
(21) Application number: 26025002.2
(22) Date of filing: 14.01.2026
(51) Int. Cl.: B23B 29/04, B23B 29/20, B23B 29/24, B23B 31/107

(54) **IMPROVED BLOCKING DEVICE FOR BLOCKING TOOL HOLDERS ON LATHES**

(30) Priority: 16.01.2025 IT 202500000618
(71) Applicant: Algra S.P.A., 24012 Val Brembilla (BG) (IT)
(72) Inventor: Vezzoli, Giovanni, 24012 Val Brembilla (BG) (IT)
(74) Representative: Lecce, Giovanni

(57) **Abstract**

An improved device for blocking tool holders on lathes, in particular for the quick and precise blocking and unblocking of tools on revolver lathes, CNC lathes, transfer machines, milling centers of any type and, in general, on machine tools that perform chip removal machining, cooperating with a tool holder (44) inserted into a seat (46) of a support (10) or (60) present on said lathes and machines, or combined with them; said device consists of a lead screw (12) and an anchoring pawl (14) coaxially engaged with each other, inserted into an opening (22) of said supports (10) or (60) and orthogonally oriented with respect to the tool holder (44). The anchoring pawl (14) is provided at its lower end with a shaped recess (40) apt to engage in rotation with a complementary recess (42) formed along the rear part (54) of the tool holder (44).

## Description

The present invention relates to an improved device for blocking tool holders on lathes.

More specifically, the present invention refers to an improved device for quick and precise blocking of motorized or non-motorized tool holders, especially but not critically suitable for use on revolver lathes, comprising a carriage with a rotating turret apt to support various tools for machining workpieces. The device of the invention can in any case be applied to CNC lathes, transfer machines, machining centers, milling machines of any type and, in general, to machine tools that perform chip removal machining.

As is well known, the various lathe tools are combined with specific tool holders, which are inserted from time to time into a support on the lathes themselves; the need to repeatedly replace these tools implies interrupting the production cycle, as laborious operations are required to unblock and replace the tool and then block and center the replacement tool to be installed.

EP 3 357 638, filed by the same applicant, describes an advantageous solution that overcomes the above-mentioned drawbacks. According to this solution, quick, easy, and precise connection is made possible by a device incorporating an anchoring pawl, provided at one end of a frustoconical seat; the anchoring pawl is inserted into the tool holder support on the lathe and a collar attachment, also frustoconical in shape, formed on said tool holder, engages the frustoconical seat. The device, manufactured on the basis of the aforementioned European Patent, allows for quick and easy replacement and centering of tool holders on lathes, especially CNC lathes; on revolver lathes, which are provided with a rotating turret on which multiple tools are installed, such device encounters limitations that derive essentially from its overall size, particularly in relation to the support on the lathe. In fact, the tool holder support needs to be sized so that two contiguous openings can be made on it, extending vertically and aligned along the longitudinal axis of said support, to accommodate the blocking device and the means for its activation engaged with each other. This structural arrangement requires a significant amount of space and, as such, only a limited number of tool holders can be installed on the turret of a revolver lathe. However, it would be desirable to have a large number of tool holders with their associated tools on the turret of a revolver lathe in order to be able to carry out the various necessary operations on the workpieces without interruption.

The purpose of the present invention is to overcome the aforementioned drawback.

More specifically, the purpose of the invention is to provide a device for blocking tool holders on lathes in general and, in particular, on the turrets of revolving lathes.

A further scope of the invention is to provide a blocking device as defined above, apt to allow quick and easy installation and removal of said tool holders from lathes in general and from turrets of revolving lathes in particular.

A further scope of the invention is to provide users with a device for blocking tool holders on lathes that is capable of ensuring a high level of strength and reliability over time, and which can also be easily and economically manufactured.

These and other scopes are achieved by the device for blocking tool holders on lathes of the present invention in accordance with the main claim.

The constructional and functional characteristics of the device for blocking tool holders on lathes of the present invention can be better understood from the detailed description that follows, in which reference is made to the attached drawings representing a preferred but non-limiting embodiment in which:
Figure 1 schematically represents an exploded view of the device of the invention, the tool holder, and the relative support present on the lathe;
Figure 2 schematically represents an isometric view of the tool holder from a different angle than Figure 1;
Figure 3 schematically represents an isometric view of one of the components of Figure 1 intended to cooperate with an anchoring pawl;
Figure 4 schematically represents an isometric view of said anchoring pawl;
Figure 5 schematically shows the anchoring pawl rotated 180° with respect to Figure 4;
Figure 6 schematically shows a vertical section of the lathe support illustrated in Figure 1, incorporating the blocking device of the invention;
Figure 7 schematically shows an exploded view of a possible solution involving a disc-shaped body with multiple seats for the blocking device of the invention and for the same number of tool holders.

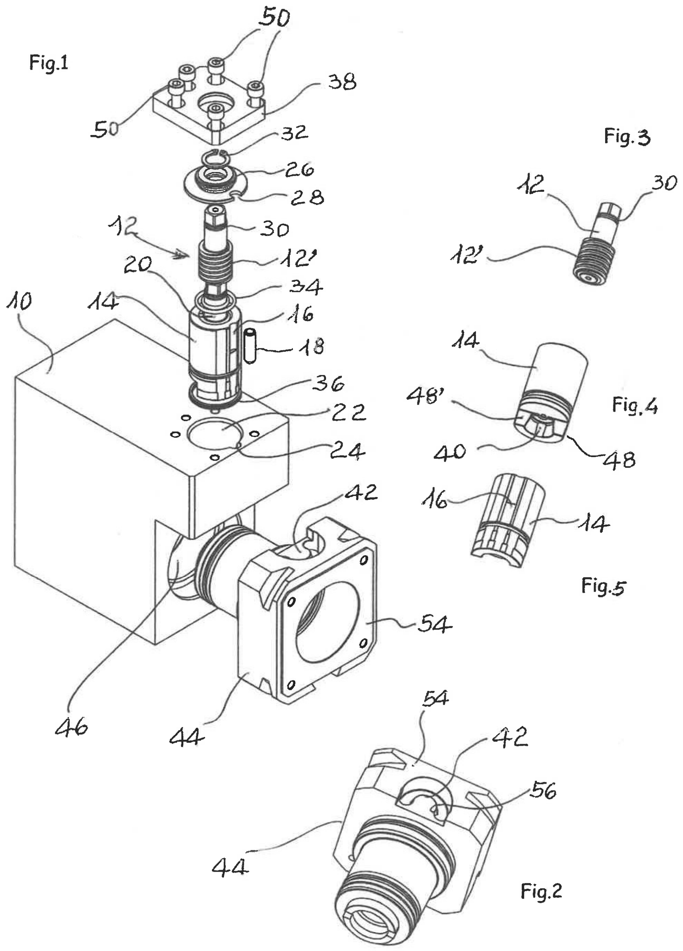

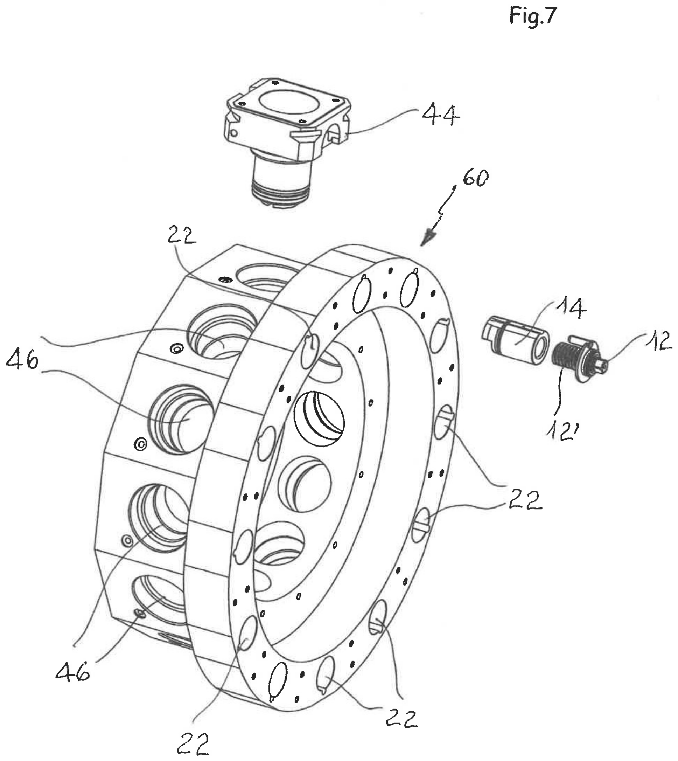

With initial reference to Figure 1, the improved device of the invention is apt to block tool holders on numerically controlled machines referred as transfer machines or machining centers. In the embodiment described herein, said tool holder blocking device is integrated into a support indicated by 10 in Figure 1, arranged, for example, on the turret of a revolver lathe; the configuration of support 10 in Figure 1 is intended to be solely illustrative, as an alternative could be a single disc of adequate height along the periphery of which multiple seats could be provided, in order to accommodate a plurality of blocking devices combined with the same number of tool holders, as illustrated in Figure 7.

According to the invention, said blocking device comprises a lead screw 12 having an external trapezoidal thread 12' (figure 3) and a substantially cylindrical pawl 14, provided with a vertically extending recess 16 on the exterior of the same, for positioning a centering and anti-rotation pin 18. The pawl 14, shown in detail in Figures 4 and 5, is provided with a vertically extending hole 20, having a thread complementary to that of the lead screw 12; the latter threadably engages in the hole 20 of the pawl 14, thereby forming a coaxial constraint between said two components. An opening 22 is provided in the upper base of the support 10, extending into a semicircular appendix 24 that allows the centering pin 18 to pass through when the pawl 14 and the lead screw 12, coaxially engaged with each other, are inserted into the support 10 through said opening 22. A bushing 26 is fitted in the upper part of the lead screw 12, peripherally provided with a recess 28 in which the centering pin 18 is positioned; a groove 30 is provided on the stem of the lead screw 12, extending above the external trapezoidal thread 12', for the positioning of a Seeger ring 32, apt to prevent the axial disengagement of the lead screw 12 itself. The latter and the pawl 14, coaxially engaged with each other, are delimited at the top and bottom by respective O-rings 34 and 36, apt to prevent of part of the tool coolant or impurities from entering the pawl 14. A plate 38 closes the opening 22 of the support 10 by means of screws 50, and the free end of the lead screw 12 protrudes from a hole made in the same plate 38. The lead screw is preferably operated manually or, optionally, by electrical means to move the anchoring pawl 14 vertically.

Said pawl, similar to the solution described in EP 3 357 638, is provided with a female frustoconical recess 40, designed to engage with a male inclined frustoconical appendage 42, formed on the tool holder; the latter is schematically shown with 44 in Figures 1, 2, and 6 and is fitted into a seat 46, formed in the support 10 and orthogonally arranged with respect to the opening 22 that receives the pawl 14 and the lead screw 12, that are coaxially engaged with each other. A plurality of seats 46 for as many tool holders 44 can be provided on a single disc, indicated with 60 in Figure 7, further comprising multiple openings 22 for housing corresponding blocking devices, consisting of a lead screw 12 and a pawl 14 coaxial with each other.

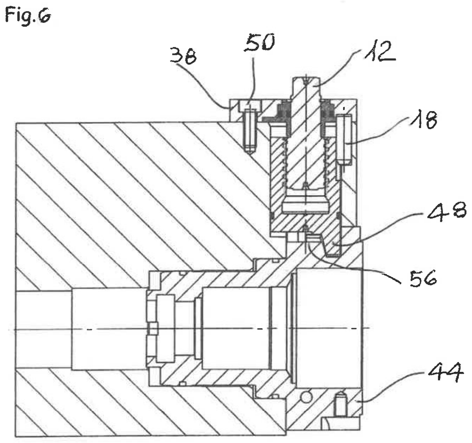

The pawl 14 consists of a substantially cylindrical body, which at the lower end is missing a semi-diametrical part; the remaining semi-diametrical part, indicated with 48 in Figure 4, defines a vertical wall 48' on which a female frustoconical recess 40 is formed; at the same time, the tool holder 44 is provided with a male frustoconical recess 42, formed in its rear wall indicated with 54 in Figures 1 and 2, which constitutes the attachment for connection to the lathe. Preferably, the frustoconical recess 42 of the tool holder 44 is formed by means of a double vertical hole with different diameters, which results in the formation of a collar-shaped appendage 56 (Figures 2 and 6) designed to engage in the frustoconical recess 40 of the anchoring pawl 14. The latter is moved up and down by the rotation of the lead screw 12 to which it is coaxially engaged; said rotation can be performed using a conventional manually operated wrench or by means of an electric actuator. When it is lowered, the anchoring pawl 14 blocks the tool holder 44, as shown in figure 6, because the frustoconical collar appendage 56 of the latter is positioned adjacent to the female frustoconical recess 40 of the same anchoring pawl 14; said appendage 56, due to the rotation of the lead screw 12 in one direction, is delimited by said recess 40 and leads to the blocking of the tool holder 44. Conversely, when rotating the lead screw 12 in the opposite direction, the anchoring pawl 14 is lifted as the frustoconical collar appendage 56 disengages from the recess 40, allowing to remove the tool holder 44 and replace it.

As can be seen from the above, the advantages achieved by the invention are evident.

In the improved device of the invention, apt to block tool holders on lathes, both revolver and CNC types, or on transfer machines, milling centers of any type and, in general, on machine tools that perform chip removal machining, the lead screw 12 and the coaxial anchoring pawl 14 allow for a substantial reduction in the overall dimensions of the tool holders 44, while still allowing for quick and easy replacement. The limited space required for the installation of the blocking device of the invention advantageously allows the installation even on a single disc-shaped support 60 (Figure 7), provided with numerous seats 46 for different tool holders 44, and as many openings 22 apt to accommodate the anchoring pawl 14 axially connected to the lead screw 12.

Although the invention has been described above with specific reference to one of its embodiments, given for illustrative and non-limiting purposes, numerous modifications and variations will be readily apparent to a technician skilled in the art, in light of the above disclosure. The present invention, therefore, is intended to encompass all modifications and variations that fall within the spirit and scope of the following claims.

## Claims

1. An improved device for blocking tool holders on lathes, in particular for the quick and precise blocking and unblocking of tools on revolver lathes, CNC lathes, transfer machines, milling centers of any type and, in general, on machine tools that perform chip removal machining, cooperating with a tool holder (44) inserted into a seat (46) of a support (10) or (60) present on said lathes and machines or combined with them, **characterized by the fact that** it consists of a lead screw (12) and an anchoring pawl (14) coaxially engaged with each other, inserted into an opening (22) of said supports (10) or (60) and orthogonally oriented with respect to the tool holder (44), said anchoring pawl (14) being provided at the lower end with a shaped recess (40) apt to engage in rotation with a complementary recess (42) formed along the rear part (54) of said tool holder (44).

2. The blocking device of claim 1, **characterized in that** the lead screw (12) is provided with an external trapezoidal thread (12') for engagement with the anchoring pawl (14), which is provided with a hole (20) extending vertically and having a thread complementary to that of the lead screw (12).

3. The blocking device of claim 2, **characterized in that** the anchoring pawl (14) is provided with a vertically extended recess (16) on the exterior of the same for positioning a centering and anti-rotation pin (18), and the opening (22) of the supports (10) and (60) extends into a semicircular appendix (24) for the passage of said centering pin (18) when the pawl (14) and the lead screw (12), coaxially engaged with each other, are inserted into said supports.

4. The blocking device of claim 2, **characterized in that** the lead screw (12) is provided at its upper part with a bushing (26) having a peripheral recess (28) in which the centering and anti-rotation pin (18) is positioned, on the stem of the lead screw (12), above the external trapezoidal thread (12'), a groove (30) being made for the positioning of a Seeger ring (32) apt to prevent the axial disengagement of the lead screw itself.

5. The blocking device of claim 2, **characterized in that** the lead screw (12) and the pawl (14) coaxially engaged with each other are delimited above and below by respective O-rings (34) and (36).

6. The blocking device of claim 1, **characterized in that** the recess (40) has a female frustoconical shape and is formed on the vertical wall (48') of a diametrical half-part (48) of the anchoring pawl (14).

7. The blocking device of claim 1, **characterized in that** the tool holder (44) is provided with a male frustoconical recess (42) formed in its rear part (54) by means of a double vertical hole with different diameters, which results in the formation of a collar appendage (56) apt to engage in the female frustoconical recess (40) of the anchoring pawl (14).

8. The blocking device of claim 1, **characterized in that** the opening (22) of the support (10) is closed by means of screws (50) by a plate (38) from which the free end of the lead screw (12) protrudes, the latter being operated manually or by electrical means.
